# EUROPEAN PATENT APPLICATION

(11) **EP 4 671 167 A1**
(43) Date of publication of application: **31.12.2025**
(21) Application number: 24825002.9
(22) Date of filing: 24.04.2024
(51) Int. Cl.: B65G 47/84

(54) **INFORMATION ACQUISITION DEVICE AND SORTING APPARATUS**

(30) Priority: 21.06.2023 CN 202310748890
(71) Applicant: Zhuhai Titans New Power Electronics Co., Ltd, Zhuhai, Guangdong 519000 (CN)
(72) Inventor: LI, Yong, Zhuhai, Guangdong 519000 (CN); LI, Li, Zhuhai, Guangdong 519000 (CN); ZHANG, Zhou, Zhuhai, Guangdong 519000 (CN)
(74) Representative: Murgitroyd & Company
(86) International application number: PCT/CN2024/089503
(87) International publication number: WO 2024/260101

(57) **Abstract**

An information collection device includes a feed conveying assembly (1000), diversion assemblies (2000), and an information collection assembly. The feed conveying assembly (1000) includes a feed conveying channel (1100). Supporting cups move on the feed conveying channel (1100) along a feed conveying direction. Each of the diversion assemblies (2000) includes a first rotary disk (2100). An outer peripheral sidewall of the first rotary disk (2100) is provided with first transfer-positions (2101). The first rotary disk (2100) rotates to move along the feed conveying direction to transfer the supporting cups from the feed conveying channel (1100) to the first transfer-positions (2101). The information collection assembly is configured to collect information of the supporting cups conveyed by the diversion assemblies (2000). The diversion assemblies (2000) are respectively arranged on two sides of the feed conveying channel (1100) to divert the supporting cups on the feed conveying assembly. A sorting apparatus includes the information collection device.

## Description

This application claims priority to the benefit of Chinese Patent Application No. 202310748890.3 filed on June 21, 2023 to China Patent Office, and entitled "INFORMATION COLLECTION DEVICE AND SORTING APPARATUS". The disclosure of which is incorporated herein by reference in its entirety.

### TECHNICAL FIELD

Embodiments of the present disclosure relate to, but are not limited to, the technical field of battery manufacturing apparatuses, and in particular to an information collection device and a sorting apparatus.

### BACKGROUND

Battery sorting is an important process in manufacturing batteries. Commonly, information of supporting cups and the batteries is collected by means of radio frequency identification (RFID) technology or image scanning. A control system of a sorting apparatus completes grading of the batteries according to the collected information. During automated continuous production processes, the supporting cups are continuously conveyed on a conveying channel. The number of supporting cups is large, so that both a spacing between adjacent two of the supporting cups and the time reserved for information collection are insufficient, which may affect the information reading of the supporting cups and the batteries, the sorting accuracy, and the production efficiency.

### SUMMARY

The following is a summary of topics described in detail in the present disclosure. This summary is not intended to limit a scope of the claims.

Embodiments of the present disclosure provide an information collection device and a sorting apparatus, and technical solutions adopted are as follows.

The sorting apparatus provided by the embodiments of the present disclosure includes the information collection device.

The information collection device provided by the embodiments of the present disclosure includes a feed conveying assembly, diversion assemblies, and an information collection assembly. The feed conveying assembly includes a feed conveying channel. Supporting cups move on the feed conveying channel along a feed conveying direction. Each of the diversion assemblies includes a first rotary disk. An outer peripheral sidewall of the first rotary disk is provided with first transfer-positions. The first rotary disk rotates to move along the feed conveying direction to transfer the supporting cups from the feed conveying channel to the first transfer-positions. The information collection assembly is configured to collect information of the supporting cups conveyed by the diversion assemblies. The diversion assemblies are respectively arranged on two sides of the feed conveying channel to divert the supporting cups on the feed conveying assembly.

In some embodiments of the present disclosure, the first transfer-positions are fixed with the supporting cups in a magnetic attraction manner. The outer peripheral sidewall of the first rotary disk is further provided with first avoidance positions. Each of the first avoidance positions is provided between adjacent two of the first transfer-positions.

In some embodiments of the present disclosure, two first rotary disks are symmetrically arranged on the two sides of the feed conveying channel.

In some embodiments of the present disclosure, each of the diversion assemblies further includes a second rotary disk. An outer peripheral sidewall of the second rotary disk is provided with second transfer-positions. The supporting cups at the first transfer-positions are capable of being transferred to the second transfer-positions. When the second rotary disk is transferring the supporting cups, the information collection device collects the information of the supporting cups at the second transfer-positions.

In some embodiments of the present disclosure, each of the diversion assemblies further includes a second guiding structure arranged along an outer periphery of the second rotary disk.

In some embodiments of the present disclosure, each of the diversion assemblies further includes a rejection component. The rejection component includes a rejection driver and a rejection pushing structure connected with the rejection driver. When being driven by the rejection driver, the rejection pushing structure pushes the supporting cups out from the second transfer-positions.

In some embodiments of the present disclosure, the second guiding structure includes a movable avoidance structure. The avoidance structure is capable of moving to a position for avoiding the supporting cups, so that the rejection pushing structure is capable of pushing the supporting cups out from the second transfer-positions.

In some embodiments of the present disclosure, each of the diversion assemblies further comprises a third rotary disk. An outer peripheral sidewall of the third rotary disk is provided with third transfer-positions. The supporting cups at the second transfer-positions are capable of being transferred to the third transfer-positions. The third rotary disk is configured to convey the supporting cups out from the diversion assemblies.

In some embodiments of the present disclosure, both the first transfer-positions and the first avoidance positions are provided with recessed accommodation regions. The accommodation regions of the first transfer-positions possess magnetic attraction, and the accommodation regions of the first avoidance positions possess no magnetic attraction.

Other aspects will become apparent upon reading and understanding the accompanying drawings and detailed description.

### BENEFICIAL EFFECTS

The embodiments of the present disclosure have at least following beneficial effects. In the information collection device, the supporting cups in the feed conveying assembly are diverted by using the diversion assemblies, and the information of the supporting cups after being diverted is collected, respectively. The information is collected simultaneously on multiple channels, so as to improve the efficiency and meet production requirements. The present disclosure may be widely applied to the technical field of battery manufacturing apparatuses.

### BRIEF DESCRIPTION OF THE DRAWINGS

The described and/or additional aspects and advantages of the embodiments of the present disclosure will become apparent and readily understood when taken in conjunction with the following drawings. It should be noted that the embodiments shown in the following drawings are exemplary and are merely used to explain the present disclosure, and should not be construed as limiting the present disclosure.
FIG. 1 is a structural view of an information collection device according to the embodiments of the present disclosure, in which two diversion assemblies are provided, and two first rotary disks are symmetrically arranged on two sides of a feed conveying channel.
FIG. 2 is a structural view of a diversion assembly according to the embodiments of the present disclosure.
FIG. 3 is a structural view of a feed guiding structure, a first guiding structure, a second guiding structure, a third guiding structure, and a discharge guiding structure according to the embodiments of the present disclosure.

Reference numerals are illustrated as follows: 1000, feed conveying assembly; 1100, feed conveying channel; 1200, feed guiding structure; 2000, diversion assembly; 2100, first rotary disk; 2101, first transfer-position; 2102, first avoidance position; 2103, first guiding structure; 2200, second rotary disk; 2201, second transfer-position; 2202, second guiding structure; 2203, avoidance structure; 2204, second avoidance region; 2300, third rotary disk; 2301, third transfer-position; 2302, third guiding structure; 2400, rejection component; 2401, material rejection region; 2500, discharge conveying assembly; 2501, partition plate.

### DETAILED DESCRIPTION

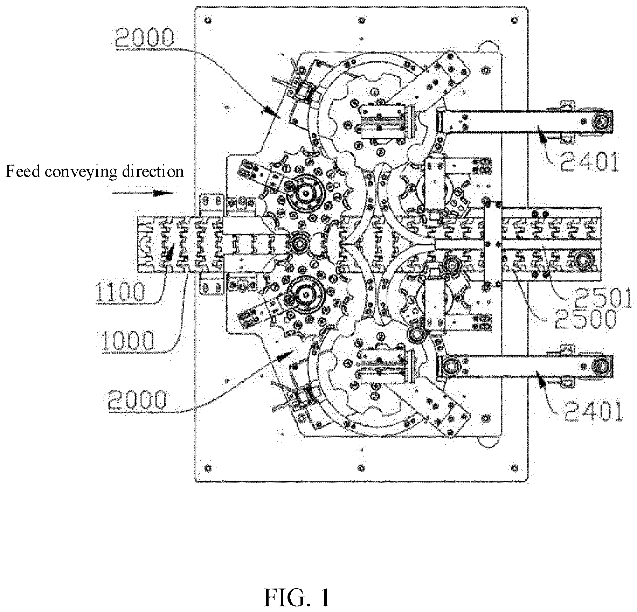

Embodiments of the present disclosure will be described in detail below with reference to FIGs. 1 to 3. Examples of the embodiments are shown in the accompanying drawings, and reference numerals that are the same or similar all along represent same or similar members or members have the same or similar functions. The embodiments that are described with reference to the accompany drawings are examples, and are only used to interpret the present disclosure, instead limiting the present disclosure.

In the description of the present disclosure, it should be understood that, orientations or position relationships indicated by terms such as "center", "middle", "longitudinal", "transverse", "length", "width", "thickness" " "up", "down", "front", "back", "left", "right", "vertical", "horizontal", "top", "bottom", "in", "out", "axial", "radial", and "circumferential" are orientations or position relationship shown based on the accompanying drawings, and are merely used for describing the present disclosure and simplifying the description, rather than indicating or implying that the apparatus or element must have a particular orientation or be constructed and operated in a particular orientation, and therefore, should not be understood as a limitation on the present disclosure. In addition, a feature defined as "first" or "second" may explicitly or implicitly include one or more of the features. In the description of the present disclosure, unless otherwise stated, "plurality" means two or more.

In the description of the present disclosure, it should be understood that, unless specified or limited otherwise, the terms "connected", "coupled", and "fixed" are used broadly, and may be, for example, fixed connections, detachable connections, or integrated connections; may be mechanical connections, may also be electrical connections; may also be direct connections or indirect connections via intervening structures; may also be inner communications of two elements. For those skilled in the art, the specific meanings of the above terms in the present disclosure can be understood according to specific circumstances.

Embodiments of the present disclosure relate to an information collection device. The information collection device includes a feed conveying assembly 1000. The feed conveying assembly 1000 includes a feed conveying channel 1100. Supporting cups move along a feed conveying direction in the feed conveying channel 1100 to feed the information collection device. Optionally, the information collection device includes diversion assemblies 2000 and an information collection assembly. Two diversion assemblies 2000 are provided. Specifically, referring to FIG. 1, the diversion assemblies 2000 are respectively arranged on two sides of the feed conveying channel 1100 to divert the supporting cups of the feed conveying channel 1000. The information collection assembly is used to collect information of the supporting cups conveyed by the diversion assemblies 2000. Optionally, each of the diversion assemblies 2000 is configured with the information collection assembly, respectively.

It should be noted that the feed conveying direction refers to a moving direction of the supporting cups in the feed conveying channel 1100.

It may be understood that compared with the information collection and identification of the supporting cups conveyed along one conveying line in the related technology, in the information collection device of the embodiments of the present disclosure, the supporting cups on the feed conveying channel 1100 are diverted to the two diversion assemblies 2000. The diversion assemblies 2000 alternately receive the supporting cups and collect the information respectively, thereby meeting time requirements of the information collection assembly and improving the efficiency of identifying the information of the supporting cups.

Referring to the drawings, each of the diversion assemblies 2000 includes a first rotary disk 2100. The first rotary disk 2100 is used to transfer the supporting cups in the feed conveying channel 1100. Specifically, an outer peripheral sidewall of the first rotary disk 2100 is provided with first transfer-positions 2101. When the first rotary disk 2100 rotates to move along the feed conveying direction, the supporting cups on the feed conveying channel 1100 can be transferred to the first transfer-positions 2101, and the supporting cups move with the rotation of the first rotary disk 2100 at the first transfer-positions 2101 to complete diversion of the supporting cups.

It should be noted that the rotation of the first rotary disk 2100 along the feed conveying direction means that during the rotation of the first rotary disk 2100, a part of the first rotary disk 2100 located in the feed conveying channel 1100 has a vector direction of a velocity component along the feed conveying direction, and the vector direction is the same as the feed conveying direction.

It can be understood that a plurality of first transfer-positions 2101 are arranged at intervals on the outer peripheral sidewall of the first rotary disk 2100 to improve the diversion efficiency. Optionally, the first transfer-positions 2101 are arranged at equal intervals along a circumference on the outer peripheral sidewall of the first rotary disk 2100, so that the supporting cups are continuously conveyed at equal intervals. During a process of diverting the supporting cups, spacings of the supporting cups can be kept evenly distributed to meet spacing requirements of the information collection assembly for the supporting cups.

In one embodiment, the first transfer-positions 2101 are fixed with the supporting cups in a magnetic attraction manner, so that the supporting cups are fixed at the first transfer-positions 2101 and are capable of moving with the rotation of the first rotary disk 2100.

Specifically, the first rotary disk 2100 is provided with a magnetic member. The magnetic member is disposed at a position close to the first transfer-positions 2101. Under a case where the first transfer-positions 2101 rotate to the feed conveying channel 1100 and the supporting cups enter the first transfer-positions 2101, the magnetic member attracts the supporting cups by magnetic force. The magnetic member may be a magnet or an electromagnet.

In some embodiments, the first transfer-positions 2101 are provided with recessed accommodation regions. Optionally, the accommodation regions of the first transfer-positions 2101 possess a magnetic attraction effect.

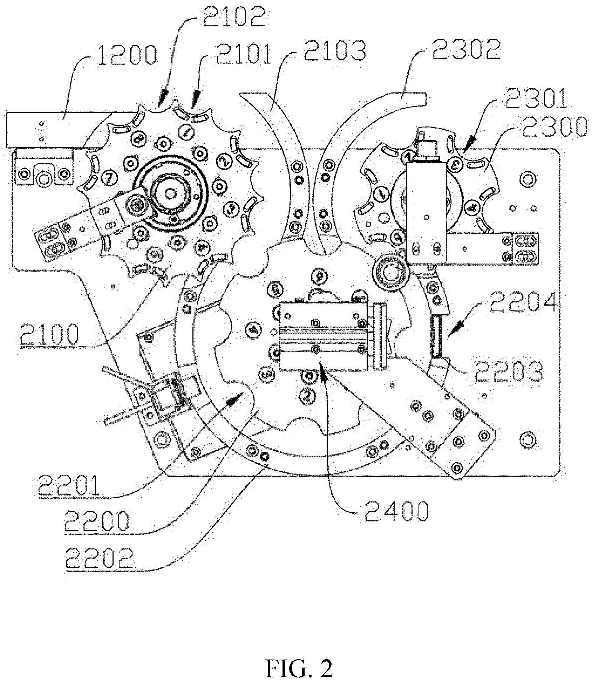

In one embodiment, referring to FIG. 2, the outer peripheral sidewall of the first rotary disk 2100 is provided with first avoidance positions 2102. Each of the first avoidance positions 2102 is provided between adjacent two of the first transfer-positions 2101. The first avoidance positions 2102 are used for avoiding the supporting cups in the feed conveying channel 1100. Specifically, the first avoidance positions 2102 on the first rotary disk 2100 are used for avoiding the supporting cups that are not diverted to the first rotary disk 2100, so that these supporting cups are diverted to another first rotary disk 2100.

Specifically, the first avoidance positions 2102 are provided with recessed accommodation regions. It may be understood that the accommodation regions of the first avoidance positions 2102 possess no magnetic attraction effect.

Optionally, under a case where both the first transfer-positions 2101 and the first avoidance positions 2102 are provided with the accommodation regions, the accommodation regions are arranged at equal intervals on the outer peripheral sidewall of the first rotary disk 2100. The accommodation regions of the first transfer-positions 2101 and the accommodation regions of the first avoidance positions 2102 are alternately arranged.

In some embodiments, two first rotary disks on the two sides of the feed conveying channel 1100 are arranged symmetrically. Under a case where two first rotary disks 2100 symmetrically arranged rotate synchronously, the first transfer-positions 2101 of one of the two first rotary disks 2100 on one side rotate to the feed conveying channel 1100, and the first avoidance positions 2102 of the other one of the two first rotary disks 2100 symmetrically arranged on the other side rotates to the feed conveying channel 1100. The accommodation regions of the first transfer-positions 2101 and the accommodation regions of the first avoidance positions 2102 form accommodation regions for the supporting cups.

It may be understood that under a case where the first avoidance positions 2102 rotate to the feed conveying channel 1100 and the supporting cups enter the first avoidance positions 2102, the first avoidance positions 2102 do not attract the supporting cups, i.e., the first avoidance positions 2102 possess no magnetic attraction effect.

In some embodiments, each of the diversion assemblies 2000 further includes a first guiding structure 2103. A shape of the first guiding structure 2103 is an arc. The first guiding structure 2103 is disposed along an outer periphery of the first rotary disk 2100. During the rotation of the first rotary disk 2100, the first guiding structure 2103 has a limiting effect on the supporting cups at the first transfer-positions 2101 to prevent the supporting cups from disengaging from the first transfer-positions 2101.

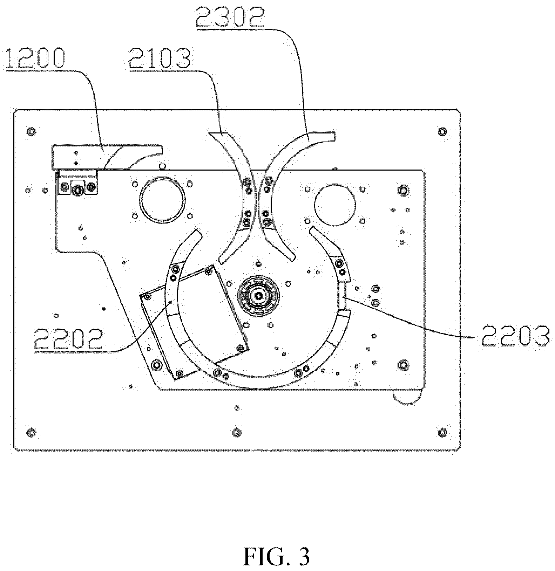

In one embodiment, the feed conveying assembly 1000 includes at least one feed guiding structure 1200. Referring to FIGs. 2 and 3, the feed guiding structure 1200 is disposed on the feed conveying channel 1100. The feed guiding structure 1200 is disposed along the feed conveying direction. The feed conveying assembly 1000 is provided with two feed guiding structures 1200 in the feed conveying channel 1100. The two feed guiding structures 1200 are respectively arranged close to the two sides of the feed conveying channel 1100. The supporting cups are fed in a channel between the two feed guiding structures 1200, so as to define positions of the supporting cups in the feed conveying channel 1100, thereby ensuring that the supporting cups can correspondingly enter the first transfer-positions 2101 or the first avoidance positions 2102 during a feeding process.

In one embodiment, each of the diversion assemblies 2000 includes a torque detection structure. The torque detection structure is used for monitoring a torque of a rotating shaft where the first rotary disk 2100 is located. Specifically, during a process of the first rotary disk 2100 transferring the supporting cups, if the first rotary disk 2100 malfunctions such as getting stuck due to excessive torque, the torque detection structure triggers an alarm of the apparatus, and the sorting apparatus stops operating.

Specifically, the torque detection structure includes a torque limiter and a first sensor. The torque limiter is disposed on the rotating shaft of the first rotary disk 2100. If a torque force of the first rotary disk 2100 is too large, the torque limiter triggers the first sensor. A control system of the sorting apparatus sends out an alarm signal after a sensing signal of the first sensor is processed by the control system of the sorting apparatus.

In one embodiment, each of the diversion assemblies 2000 further include a second rotary disk 2200. The supporting cups at the first rotary disk 2100 can be transferred to the second rotary disk 2200. Specifically, referring to FIG. 2, an outer peripheral sidewall of the second rotary disk 2200 is provided with second transfer-positions 2201. The second transfer-positions are provided with recessed accommodation regions. The supporting cups at the first transfer-positions 2101 can be transferred to the accommodation regions of the second transfer-positions 2201. The supporting cups at the second transfer-positions 2201 move with the rotation of the second rotary disk 2200. It may be understood that a plurality of second transfer-positions 2201 are provided on the outer peripheral sidewall of the second rotary disk 2200. The second transfer-positions 2201 are arranged at equal intervals.

Optionally, when the second rotary disk 2200 transfers the supporting cups, the information collection assembly collects the information of the supporting cups at the second transfer-positions 2201 and uploads the collected information to the control system of the sorting apparatus. It may be understood that the information collection assembly is disposed close to the second rotary disk 2200. Considering that a magnetic field generated by the magnetic member of the first rotary disk 2100 may affect operation of the information collection assembly, the second rotary disk 2200 is configured as a transition rotary disk, and the information of the supporting cups is collected at the second rotary disk 2200.

Specifically, the information collection assembly includes a code reader. The code reader reads code information of the supporting cups. Optionally, the code reader is configured as an RFID code reader. It should be noted that the second rotary disk 2200 is not provided with the magnetic member to prevent the magnetic field from affecting the operation of the information collection assembly. Furthermore, the second transfer-positions 2201 are arranged at intervals on the second rotary disk 2200, so that the supporting cups can be kept at a certain spacing to prevent interference between adjacent two of the supporting cups when performing the RFID information collection, thereby ensuring the accuracy of the obtained information of the supporting cups.

Referring to FIGs. 2 and 3, each of the diversion assemblies 2000 further includes a second guiding structure 2202. A shape of the second guiding structure 2202 is an arc. The second guiding structure 2202 is disposed along an outer periphery of the second rotary disk 2200. One end of the second guiding structure 2202 peels off the supporting cups at the first transfer-positions 2101 and guides the supporting cups to the second transfer-positions 2201. Furthermore, during the rotation of the second rotary disk 2200, the second guiding structure 2202 has a limiting effect on the supporting cups at the second transfer-positions 2201 to prevent the supporting cups from disengaging from the second transfer-positions 2201.

In one embodiment, referring to FIG. 2, each of the diversion assemblies 2000 further includes a rejection component 2400. The rejection component 2400 is used for rejecting the supporting cups from the second transfer-positions 2201. Specifically, if the information collection assembly fails to read the supporting cups, the supporting cups failed to read the code are rejected by the rejection component 2400 from the second rotary disk 2200.

Specifically, the rejection component 2400 includes a rejection driver and a rejection pushing structure. The rejection pushing structure is connected with the rejection driver. The rejection driver includes a motor or a cylinder. The rejection pushing structure includes a push plate or a push block. It may be understood that when being driven by the rejection driver, the rejection push structure pushes the supporting cups out from the second transfer-positions 2201. Optionally, the rejection pushing structure pushes the supporting cups out along a radial direction of the second rotary disk 2200.

Optionally, referring to FIG. 1, each of the diversion assemblies 2000 includes a material rejection region 2401. The supporting cups rejected by the rejection component 2400 enter the material rejection region 2401. The material rejection region 2401 is provided with a third sensor. If the supporting cups in the material rejection region 2401 are full of materials, the third sensor generates a signal to remind the workers to take out these supporting cups. Alternatively, in some embodiments, each of the diversion assemblies 2000 is provided with a conveying line. The supporting cups rejected by the rejection component 2400 are conveyed to a region where the supporting cups are collected or processed.

In some embodiments, referring to FIG. 2, the second guiding structure 2202 is provided with a second avoidance region 2204. The second avoidance region 2204 is provided as a recessed opening on the second guiding structure 2202, so that the supporting cups rejected by the rejection component 2400 are pushed out from the second avoidance region 2204. Alternatively, the second guiding structure 2202 may be disconnected, and a disconnected position of the second guiding structure 2202 is used as the second avoidance region 2204. That is, the second guiding structure 2202 is provided as a split structure. A gap reserved between two split structures is provided as the second avoidance region 2204.

Referring to FIG. 2, the second guiding structure 2202 includes a movable avoidance structure 2203. The avoidance structure 2203 is provided as a baffle or stop block. The avoidance structure 2203 is movable in the second avoidance region 2204. Specifically, the avoidance structure 2203 can be moved to a position for avoiding the supporting cups, so that the rejection push structure can push the supporting cups out from the second transfer-positions 2201.

It can be understood that if the avoidance structure 2203 moves to the second avoidance region 2204, and the avoidance structure 2203 is in a position where the avoidance structure 2203 blocks the supporting cups form being pushed out by the rejection component 2400, a structure formed by the second guiding structure 2202 and the avoidance structure 2203 acts as a limiting effect on the supporting cups moving with the rotation of the second rotary disk 2200, thereby preventing the supporting cups from disengaging from the second transfer-positions 2201.

In some embodiments, the avoidance structure 2203 is telescopically disposed at a bottom of the second avoidance region 2204. The avoidance structure 2203 is capable of extending at the bottom of the second avoidance region 2204 and blocking the supporting cups from being pushed out. Alternatively, the avoidance structure 2203 is retracted to a position flush with the bottom of the second avoidance region 2204. Alternatively, in some embodiments, the avoidance structure 2203 is telescopically disposed on a sidewall of the second guiding structure 2202 and may extend into the second avoidance region 2204.

It should be noted that the movement of the avoidance structure 2203 is realized by a motor or a cylinder.

In one embodiment, each of the diversion assemblies 2000 further includes a second sensor. The second sensor is used for detecting whether each of the supporting cups at the second transfer-positions 2201 has a battery. Specifically, the second sensor is provided as a proximity switch.

It may be understood that if the second sensor detects an empty cup holder, the second sensor sends a signal to the control system, and the control system records a code of the empty supporting cup. It should be noted that the rejection component 2400 in the information collection device can reject the empty cup holder from a corresponding one of the second transfer-positions 2201.

In one embodiment, each of the diversion assemblies 2000 further includes a third rotary disk 2300. The supporting cups at the second rotary disk 2200 can be transferred to the third rotary disk 2300. The supporting cups that have been successfully decoded are transferred to the third rotary disk 2300. The third rotary disk 2300 is used to convey the supporting cups out from the diversion assemblies 2000.

Specifically, an outer peripheral sidewall of the third rotary disk 2300 is provided with third transfer-positions 2301. The third transfer-positions 2301 are provided with recessed accommodation regions. The supporting cups at the second transfer-positions 2201 can be transferred to the accommodation regions of the third transfer-positions 2301. It can be understood that a plurality of third transfer-positions 2301 are provided on the outer peripheral sidewall of the third rotary disk 2300. The third transfer-positions 2301 are arranged at equal intervals.

Referring to FIGs. 2 and 3, each of the diversion assemblies 2000 further includes a third guiding structure 2302. One end of the third guiding structure 2302 guides the supporting cups at the second transfer-positions 2201 to the third transfer-positions 2301. Optionally, a shape of the third guiding structure 2302 is an arc. During the rotation of the third rotary disk 2300, the third guiding structure 2302 has a limiting effect on the supporting cups at the third transfer-positionworkstation to prevent the supporting cups from disengaging from the third transfer-positions 2301.

Optionally, the third transfer-positions 2301 are fixed with the supporting cups in a magnetic attraction manner, so that the supporting cups are fixed at the third transfer-positions 2301 and are capable of moving with the rotation of the third rotary disk 2300. Specifically, the third rotary disk 2300 is provided with a magnetic member. The magnetic member is disposed at a position close to the third transfer-position 2301. In some embodiments, the magnetic element may be provided as a magnet or an electromagnet.

Regarding the transfer of the supporting cups by the third transfer-positions 2301, alternatively, in some embodiments, the third transfer-positions 2301 are not fixed with the supporting cups by adsorption. Under a guidance action of the third guiding structure 2302, after the supporting cups enter the third transfer-positions 2301, the third rotary disk 2300 rotates and combines the limit of the supporting cups by the third guiding structure 2302, thereby realizing the movement of the supporting cups.

In one embodiment, the information collection device further includes a rotary disk driving assembly. The rotary disk driving assembly includes a rotary disk driver. The rotary disk driver includes a motor. A rotating shaft of the rotary disk driver is provided with a driving gear. Rotating shafts of the first rotary disk 2100, the second rotary disk 2200, and the third rotary disk 2300 are respectively provided with a driven gear. The rotating driving assembly drives the driven gears to rotate in a meshing transmission manner, thereby driving the first rotary disk 2100, the second rotary disk 2200, and the third rotary disk 2300 to rotate.

In one embodiment, referring to FIG. 1, the information collection device further includes a discharge conveying assembly 2500. The supporting cups at the third rotary disk 2300 can be transferred to the discharge conveying assembly 2500. The discharge conveying assembly 2500 conveys the supporting cups out from the information collection device. Specifically, the discharge conveying assembly 2500 includes a chain plate, a conveying roller, or a conveyor belt.

Optionally, the discharge conveying assembly 2500 is provided with a discharge guiding structure. The discharge guiding structure is disposed on a side of the discharge conveying assembly 2500. The discharge guiding structure is disposed along a conveying direction of the discharge conveying assembly 2500. The discharge guiding structure is used to guide the supporting cups at the third transfer-positions 2301 to the discharge conveying assembly 2500, so that the supporting cups are disengaged from the third transfer-positions 2301. In some embodiments, the discharge guiding assembly is disposed on a retaining edge of the discharge conveying assembly 2500.

In some embodiments, in the information collection device, each of the diversion assemblies 2000 is configured with the discharge conveying assembly 2500. In some embodiments, one discharge conveying assembly 2500 is provided. The discharge conveying assembly 2500 is separated by a partition plate 2501 to form two discharge conveying channels, and the two discharge conveying channels are correspondingly convey the supporting cups send out by the two diversion assemblies 2000.

In some embodiments, the feed conveying assembly 1000 and the discharge conveying assembly 2500 share one conveying line. Specifically, a front section of the conveying line serves as a feed conveying end and is provided as the feed conveying assembly 1000 for feeding. A rear section of the conveying line serves as a discharge conveying end and is provided as the discharge conveying assembly 2500 for discharging.

The present disclosure relates to a sorting apparatus. The sorting apparatus includes the information collection device. Optionally, the sorting apparatus includes a grading assembly. The control system of the sorting apparatus identifies and sorts the batteries in the supporting cups according to the information of these supporting cups collected by the information collection device and completes the sorting of the batteries through the grading assembly.

In the description of this specification, when reference terms such as "one embodiment", "some embodiments", "illustrative embodiments", "examples", "specific examples", or "some examples" appear, it means that specific features, structures, materials, or characteristics described in connection with the embodiment or example are included in at least one embodiment or example of the present disclosure. In this specification, the illustrative expressions of the above terms do not necessarily refer to the same embodiment or example. Moreover, the specific features, structures, materials, or characteristics described may be combined in any one or more embodiments or examples in a suitable manner.

Although the embodiments of the present disclosure have been described in detail above with reference to the accompanying drawings, the present disclosure is not limited to the above-described embodiments, and various modifications can be made without departing from the gist of the present disclosure within the scope of knowledge possessed by those skilled in the art.

In the description of the present disclosure, if the symbol " , " appears in the patent title, it indicates a "and" relationship, rather than an "or" relationship. For example, if the patent title is "A , B" , it means that the contents claimed in the present disclosure are: a technical solution with a subject name of A and a technical solution with a subject name of B.

## Claims

1. An information collection device, comprising:
a feed conveying assembly comprising a feed conveying channel, wherein supporting cups move on the feed conveying channel along a feed conveying direction;
diversion assemblies each comprising a first rotary disk, wherein an outer peripheral sidewall of the first rotary disk is provided with first transfer-positions, and the first rotary disk rotates to move along the feed conveying direction to transfer the supporting cups from the feed conveying channel to the first transfer-positions; and
an information collection assembly configured to collect information of the supporting cups conveyed by the diversion assemblies;
wherein the diversion assemblies are respectively arranged on two sides of the feed conveying channel to divert the supporting cups on the feed conveying assembly.

2. The information collection device according to claim 1, wherein the first transfer-positions are fixed with the supporting cups in a magnetic attraction manner, the outer peripheral sidewall of the first rotary disk is further provided with first avoidance positions , and each of the first avoidance positions is provided between adjacent two of the first transfer-positions.

3. The information collection device according to claim 1 or 2, wherein two first rotary disks are symmetrically arranged on the two sides of the feed conveying channel.

4. The information collection device according to claim 2, wherein each of the diversion assemblies further comprises a second rotary disk, an outer peripheral sidewall of the second rotary disk is provided with second transfer-positions, the supporting cups at the first transfer-positions are capable of being transferred to the second transfer-positions, and when the second rotary disk is transferring the supporting cups, the information collection device collects the information of the supporting cups at the second transfer-positions.

5. The information collection device according to claim 4, wherein each of the diversion assemblies further comprises a second guiding structure disposed along an outer periphery of the second rotary disk.

6. The information collection device according to claim 5, wherein each of the diversion assemblies further comprises a rejection component , the rejection component comprises a rejection driver and a rejection pushing structure connected with the rejection driver, and when being driven by the rejection driver, the rejection pushing structure pushes the supporting cups out from the second transfer-positions.

7. The information collection device according to claim 6, wherein the second guiding structure comprises a movable avoidance structure, and the avoidance structure is capable of moving to a position for avoiding the supporting cups, so that the rejection pushing structure is capable of pushing the supporting cups out from the second transfer-positions.

8. The information collection device according to any one of claims 4 to 7, wherein each of the diversion assemblies further comprises a third rotary disk, an outer peripheral sidewall of the third rotary disk is provided with third transfer-positions, the supporting cups at the second transfer-positions are capable of being transferred to the third transfer-positions, and the third rotary disk is configured to convey the supporting cups out from the diversion assemblies.

9. The information collection device according to claim 2, wherein both the first transfer-positions and the first avoidance positions are provided with recessed accommodation regions, the accommodation regions of the first transfer-positions possess magnetic attraction, and the accommodation regions of the first avoidance positions possess no magnetic attraction.

10. A sorting apparatus, comprising the information collection device according to any one of claims 1 to 9.
